(19) Europäisches Patentamt
European Patent Office
Office européen des brevets

(11) **EP 2 194 716 B1**

(12) **EUROPEAN PATENT SPECIFICATION**

(45) Date of publication and mention
of the grant of the patent:
**16.05.2018 Bulletin 2018/20**

(21) Application number: **08105932.1**

(22) Date of filing: **03.12.2008**

(51) Int Cl.:
*H04N 21/234* (2011.01)　　　*H04N 21/2343* (2011.01)
*H04N 21/238* (2011.01)　　　*H04N 21/2381* (2011.01)
*H04N 21/24* (2011.01)　　　*H04N 21/2662* (2011.01)
*H04N 21/44* (2011.01)　　　*H04N 21/6377* (2011.01)
*H04N 21/6405* (2011.01)　　　*H04N 21/6408* (2011.01)
*H04N 21/658* (2011.01)

(54) **Apparatus, method and system for transmission of layered encoded multimedia signals**

Vorrichtung, Verfahren und System zur Übertragung von geschichteten kodierten Multimediasignalen

Appareil, procédé et système pour la transmission de signaux multimédia codés en couches

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**09.06.2010 Bulletin 2010/23**

(73) Proprietors:
• **Nokia Solutions and Networks GmbH & Co. KG
81541 Munich (DE)**
• **Fraunhofer-Gesellschaft zur Förderung der
angewandten Forschung e.V.
80686 München (DE)**

(72) Inventors:
• **Haustein, Thomas
14469 Potsdam (DE)**
• **Venkatasubramanian, Venkatkumar
Berlin (DE)**
• **Wirth, Thomas
10405 Berlin (DE)**

(74) Representative: **Weidel, Gottfried et al
Nokia Solutions and Networks GmbH & Co. KG
CEF T&I IPR Patent Administration
80240 Munich (DE)**

(56) References cited:
EP-A- 1 742 476　　　WO-A-2004/107755
WO-A-2006/082485　　　WO-A1-2008/050220
US-A1- 2003 195 977　　　US-A1- 2004 194 142

• JEN-CHUN CHIANG ET AL: "Scalable Video Coding of H.264/AVC Video Streaming with QoS-Based Active Dropping in 802.16e Networks" ADVANCED INFORMATION NETWORKING AND APPLICATIONS - WORKSHOPS, 2008. AINAW 2008. 22ND INTERNATIONAL CONFERENCE ON, IEEE, PISCATAWAY, NJ, USA, 25 March 2008 (2008-03-25), pages 1450-1455, XP031241020 ISBN: 978-0-7695-3096-3
• XIN JI ET AL: "Downlink OFDM Scheduling and Resource Allocation for Delay Constraint SVC Streaming" COMMUNICATIONS, 2008. ICC '08. IEEE INTERNATIONAL CONFERENCE ON, IEEE, PISCATAWAY, NJ, USA, 19 May 2008 (2008-05-19), pages 2512-2518, XP031265797 ISBN: 978-1-4244-2075-9

EP 2 194 716 B1

**Description**

The present invention relates generally to an apparatus, method and system for transmission of layered encoded multi-media signals and, particularly, to an apparatus, method and system for asynchronous transmission of layered encoded multimedia data streams adaptive to the available resources in the network and the user equipment.

Streaming has become increasingly important over the past few years. One example is mobile TV wherein mobile users can watch live TV channels via on-demand streaming. Streaming may be realized in fixed networks such as the IP-based internet or in wireless networks as defined e.g. by 3GPP (3rd Generation Partnership Project).

In case the transport network can only provide a bit rate that is lower than the content rate for a specific application, such as a movie, a so-called buffer underrun at the terminal equipment will occur after a few seconds. A buffer underrun means that no more data can be played out at the terminal equipment, i.e. a receiver of the multimedia service, which results in that the presentation stops.

Such playout interruptions caused by buffer underruns have a significant negative impact on user-perceived service quality. In particular, it is more important to guarantee uninterrupted playout than guaranteeing completely error-free high-quality pictures.

Furthermore, Orthogonal Frequency Division Multiplexing (OFDM) technology has received wide spread interest for beyond 3G wireless telecommunication systems. Primary advantage of OFDM technology is its ability to combat severe channel conditions, for example highly frequency selective channels.

In recent research, it has been realized that fading in wireless telecommunication systems can in fact be exploited by yet another way, i.e. by cleverly assigning resources to users in such a way to exploit their different channel conditions. This is termed as so-called multi-user diversity and is realized by using multi-user resource scheduling. Recent innovations in wireless telecommunications technology have acknowledged that OFDM and multi-user scheduling blend quite elegantly into a single piece, termed "multi-user OFDM" or "OFDM".

On the other hand, there is a perceived increase in demand for multimedia services particularly for mobile terminal equipment or handsets. The challenge in meeting this demand is to provide uninterrupted service over the usually unreliable and varying wireless channel. Scalable video coding, a technique by which the media content is encoded into at least four different rates is a promising way to achieve this goal. The reason being, the base layer which is the layer with least rate requirement could always be supported with prioritization. The further enhancement layers are supported if the channeled conditions permit.

Known systems consider adaptive synchronous video streaming for scalable video coding (SVC) within the 3GPP framework. The transmission in this case is synchronous in the sense that the higher layers of multimedia content are scheduled coherently with the base layer as per the physical layer channel capacity.

Usually, a sequence of MPEGs (Motion Picture Export Group) forms a GOP (Group Of Pictures). Temporal and quality resolution, i.e. scalability, is provided within the Group Of Pictures. Each Group Of Pictures (GOP) begins usually with a key picture for a reference frame which is intra-coded independently, known as I-frame. A Group Of Pictures specifies the order in which intra-frames and inter-frames are arranged.

dently, known as I-frame. A Group Of Pictures specifies the order in which intra-frames and inter-frames are arranged. Subsequent temporal resolutions are coded bi-predictively forming B-frames. A Group Of Pictures (GOP) length is defined as the length between two key pictures.

With scalable video coding (SVC), each frame in turn consists of a base layer with low resolution quality and enhancement layers of progressively higher qualities. The base layers are usually decoded independently, while the enhancement layers are decoded collectively. A P-frame base layer is decoded using the P-frame base layer of the previous Group Of Pictures (GOP).

In the publication US 2004/194142 A1 (JIANG ZHIMEI [US] ET AL) 30 September 2004 (2004-09-30) a method and system are described that reduces the impact of packet loss on video data quality. Packet selection is performed by the method and system to selectively drop low priority packets so that the overall quality of the received video data may be improved. In one exemplary embodiment, the probability of higher priority layers being delivered on time is computed and a packet is transmitted only if this probability is greater than a given threshold h.

In the publication US 2003/195977 A1 (LIU TIANMING [CN] ET AL) 16 October 2003 (2003-10-16) various embodiments provide methods and systems for streaming data that can facilitate streaming during bandwidth fluctuations in a manner that can enhance the user experience. In one aspect, a forward-shifting technique is utilized to buffer data that is to be streamed, e.g. an enhancement layer in a fine granular scalability stream. Various techniques can drop layers actively when bandwidth is constant. The saved bandwidth can then be used to pre-stream enhancement layer portions. In another aspect, a content-aware decision can be made as to how to drop enhancement layers when bandwidth decreases.

In the publication JEN-CHUN CHIANG ET AL: "Scalable Video Coding of H.264/AVC Video Streaming with QoS-Based Active Dropping in 802.16e Networks" ADVANCED INFORMATION NETWORKING AND APPLICATIONS-WORKSHOPS, 2008, AINAW 2008, 22ND INTERNATIONAL CONFERENCE ON, IEEE, PISCATAWAY; NJ, USA, 25 March 2008 (2008-03-25), pages 1450-1455, XP031241020 ISBN: 978-07695-3096-3 an active dropping mechanism to deal with the effective bandwidth utilization problem is proposed. In the proposed mechanism, if the network loading exceeds the threshold, the dropping mechanism starts to drop the enhance-ment layer data for low level user and the dropping probability is varying with the different network loading.

According to publication WO 2004/107755 A (KANG SANG HYUK [KR]), 9 December 2004 (2004-12-09)a network includes a server for providing multimedia data divided into picture groups each having a sequence of N pictures, and a terminal for displaying the multimedia data received from the server in a streaming manner. In the packet scheduling method, the sequences of the pictures are divided into motion part packets and texture part packets, and priorities are assigned to the packets according to temporal scaling. A threshold for a pre-determined priority is determined in consideration of conditions of a channel and a buffer status of the terminal and a substream is constructed using packets with priorities below the threshold within the respective picture groups.

In the publication XIN JI ET AL: "Downlink OFDM Scheduling and Resource Allocation for Delay Constraint SVC Streaming" COMMUNICATIONS, 2008, ICC'08, IEEE INTERNATIONAL CONFERENCE ON, IEEE, PICATAWAY, NJ, USA, 19 MAY 2008 (2008-05-19), pages 2512-2518, XP031265797 ISBN: 978-1-4244-2075-9 the problem of scheduling and resource allocation for multi-user video streaming over downlink OFDM channels is considered. The video streams are precoded with the SVC coding scheme, which offers both quality and temporal scalabilities. The OFDM technology provides the maximum flexibility of resource allocation in terms of time, frequency, and power. A gradient-based scheduling and resource allocation algorithm is proposed, which explicitly takes account of video contents, deadline requirements, and the previous transmission results when calculating users' priority weights.

Document EP 1742 476 A1 discloses to transport the base layer and the enhancement layers via separate RTP streams (Real Time Protocol). Typically, the base layer shall be transported using a connection oriented protocol such as TCP (Transmission Control Protocol) for QoS (Quality of Service) requirements, while enhancement layers shall be transported using connectionless protocol such as UDP (User Datagram Protocol) for flexibility.

The different layers of multi-media payload are buffered both at the transmit buffer and the receive buffer. In addition, different transmit buffers are maintained for different layers of the video payload. Therefore, there is an underlying synchronicity in the end-to-end semantics which could be very well exploited. According to the prior art, packet queues maintained at the transmitter and the receiver are, therefore, not efficiently utilized. This is because conventional systems assume that a queue which is emptied at the transmit buffer is immediately drained at the receiver, i.e. terminal equipment.

It is, therefore, an object of the present invention to provide an apparatus, method and system for transmission of layered encoded multimedia signals which reliably avoids buf-According to the present invention, this object is achieved with respect to the apparatus by the features defined in the present claim 1. With respect to the method the object is achieved by the measures indicated in the present independent claim 7 and with respect to the system the object is achieved by the features indicated in the independent claim 14.

Further subclaims refer to further specific embodiments of the present invention.

For a more complete understanding of the present invention and the advantages thereof reference is now made to the following description taking in conjunction with the accompanying drawings, in which:

Figure 1 illustrates a simplified block diagram of a system for transmission of layered encoded multimedia signals according to an example for understanding the present invention;

Figure 2 illustrates a simplified temporal scheme showing the effects of the present invention,

Figure 3 illustrates a simplified matrix showing the structure of a layered encoded multimedia signal;

Figure 4 illustrates a simplified view to show a packet arrival according to Group Of Pictures, temporal frame numbers and enhancement layers;

Figure 5 illustrates a table showing the different methods for realizing a packet prioritization queue;

Figure 6 illustrates a simplified block diagram of a system for transmission of layered encoded multimedia signals without a feedback loop;

Figure 7 illustrates a simplified block diagram of a system for transmission of layered encoded multimedia signals according to an example for understanding the present invention;

Figure 8 illustrates a system for transmission of layered encoded multimedia signals in a multicast environment according to an embodiment of the present invention; and

Figure 9 illustrates an example of client feedback on temporal scalability according to the embodiment of Figure 8.

The making and using of the presently preferred embodiments are discussed in detail below. It should be appreciated, however, that the present invention provides many applicable inventive concepts that can be embodied in a wide variety of specific contexts. The specific embodiments discussed are merely illustrative of specific way to make and use the invention, and do not limit the scope of the invention. Moreover, the same reference signs refer to same technical features if not stated otherwise. As far as "may" is used in this application it means the possibility of doing so as well as the actual technical implementation.

The present invention will be described with respect to preferred embodiments in a specific context, namely adaptive service provisioning (ASP) as adopted in the framework of 3GPP (3rd Generation Partnership Project) VHE (Virtual Home Environment). The Virtual Home Environment develops different customized user interfaces and service experience irrespective of location network and terminal capabilities. In the spirit of this VHE-framework, one would adopt multi-user scheduling of a video content encoded in different scalable video rates with receiver status feedback.

With this disclosure, we present a new combined channel and content-aware scheduling, wherein, packet prioritization is applied before asynchronously scheduling the packets. For this purpose, scalable video coding (SVC) offers a natural way to implement content-aware scheduling. The combined scheduling concept further enhances the service quality and utilizes the receiver buffer more efficiently. A typical application for such services is for supporting video-on demand such as streaming video from the internet.

Even if the present invention is described for a wireless telecommunication system the present invention and its asynchronous adaptive provisioning concept is also applicable to wirelined telecommunication systems such as DSL (Digital Subscriber Line) modem connection. With respect to wireless telecommunication systems it is particularly referred to LTE (Long Term Evolution) or WiMAX (World wide interoperability for Microwave Access).

In detail, the present invention relates to a mechanism to enable transmission of different layers of the multimedia content at the transmitter asynchronously. Channel-aware scheduling and content-aware prioritization are jointly executed at the transmitter for multi-user scheduling. Such a transmission mechanism exploits a less stringent packet expiry deadline at the terminal. In prior art the transmitter had only chance to transmit the higher layers of the video payload. Equivalently, the transmitter also transmits only base layer stream of a Group Of Pictures (GOP) as per the channel capacity. According to the present invention, a mechanism is proposed to exploit asynchronous stream transmissions in multi-user multi-layered transmissions. A unicast client feedback mechanism is proposed to efficiently manage the asynchronous transmission capability of different layers of the video payload.

According to a further aspect of the present invention an extension of the OFDMA scheduling principle is proposed for the mechanism of asynchronicity and client buffer facility. In detail, a simple scheduling rule is proposed also considering the buffer size and the layer priorities.

According to a further aspect of the present invention support for multi-cast capability at the base station or access node in a telecommunications network is described. In detail, this aspect refers to a multicast grouping mechanism to support plurality of client devices in asynchronous mode.

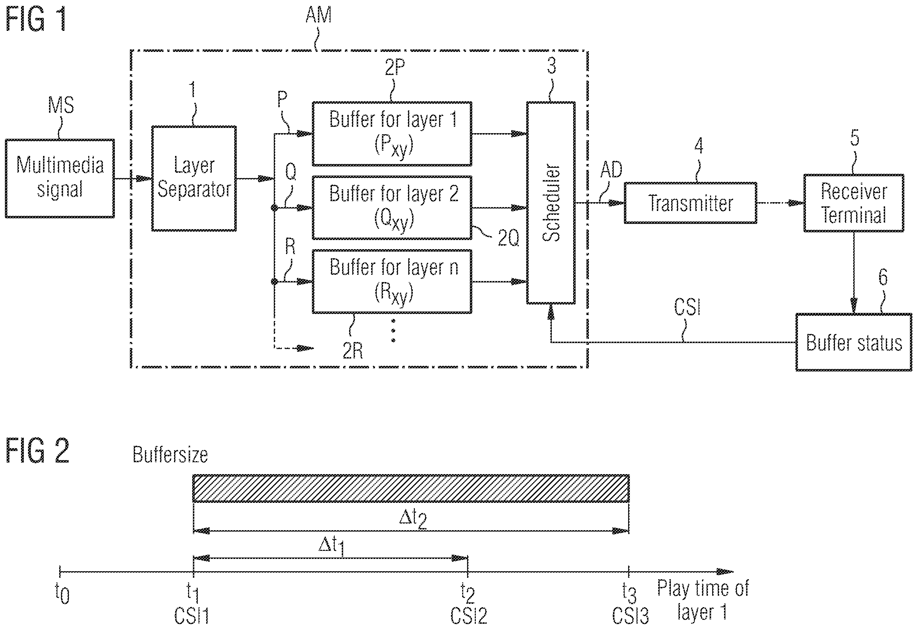

Figure 1 illustrates a simplified block diagram of a system for asynchronous transmission of layered encoded multimedia signals according to an example for understanding the present invention. In Figure 1 a layered encoded multimedia signal MS is received at an apparatus AN for transmitting this multimedia signal MS as an asynchronous data stream AD to a receiver terminal 5. Typically, the apparatus AN is implemented together with a transmitter 4 in a base station or an access node of a telecommunications network realizing e.g. a wireless access for respective mobile handsets. A respective terminal equipment, therefore, includes the receiver terminal 5 as well as a buffer or memory 6 for storing the asynchronous data AD transmitted by the transmitter 4.

According to Figure 1 the transmission apparatus AN comprises a layer separator 1 for separating the layered encoded multi-media signal MS in a base layer data stream P and at least one enhancement layer data stream Q and R. Each data stream P, Q and R includes a plurality of data packets Pxy, Qxy and Rxy having a content sequence index CSI indicating a relationship of the respective data packets with respect to a specific content sequence included in the multimedia signal MS and to be played out at the receiver terminal 5.

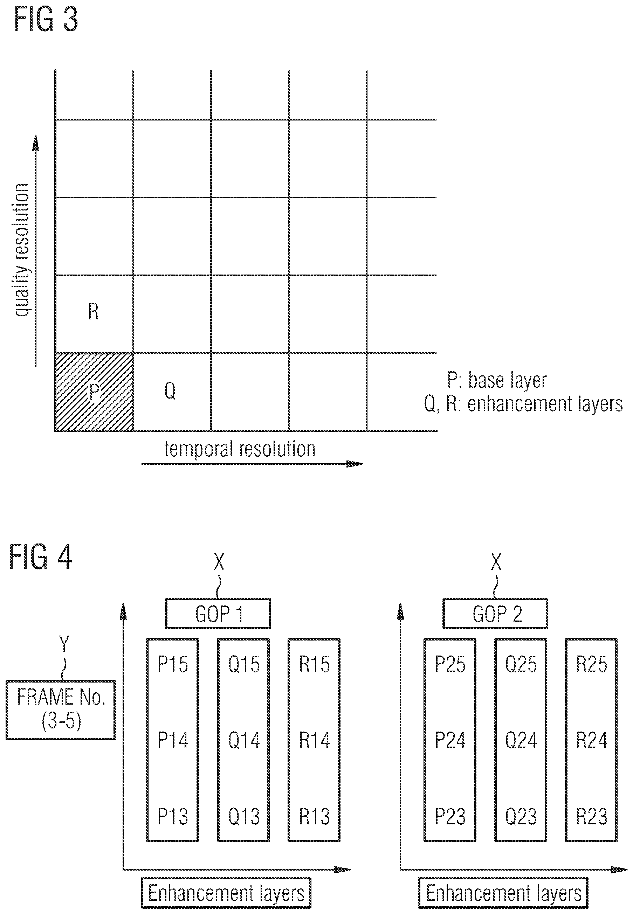

In case of a MPEG (Motion Picture Export Group) coded multi-media signal a sequence of MPEG frames forms a Group Of Pictures (GOP). Within the Group Of Pictures temporal and picture quality resolution is scalable provided as shown in Figure 3. Each Group Of Pictures begins with a key picture or a reference frame which is intra-coded independently, known as I-frame. Subsequent temporal resolutions may be coded bi-predictively forming B-frames. A Group Of Pictures length may be defined as the length between two key pictures.

According to Figure 3 each frame may consist of a base layer P with low quality (i.e. temporal and picture quality resolution) and a plurality of enhancement layers of progressively higher qualities. In detail, the base layer P may transport the data packets with the lowest resolution. The enhancement layer Q of Figure 3 may define data packets having a higher quality with respect to a temporal resolution. In detail, the enhancement layer Q may transmit data packets which improves the visibility of fast moving subjects in a video. On the other hand enhancement layer R may improve the base layer P in a picture quality resolution, e.g. pixel resolution of a picture. In detail, the enhancement layer R transmits data packets improving the picture quality or pixel resolution of a respective picture displayed at a receiver terminal 5. The further enhancement layers within the enhancement layer matrix of Figure 3 are not explicitly shown, but may further improve the temporal or picture quality resolution of a respective layer P. It is to be noted that the enhancement layer R may be the a.m. picture quality resolution or any other parameter which is defined in scalable video coding.

Going back to Figure 1 the separated data streams for the base layer P and the enhancement layers Q, R, ... are separated from the multimedia signal MS and provided to memory means 2P, 2Q, 2R, ... for buffering said data packets of said base layer data stream P and said at least one enhancement layer data stream Q and R. In order to provide a fast and cost effective separation the separator 1 may include a plurality of ports for receiving the plurality of layers of said layered encoded multimedia signal MS at its input, which allows very simple separation of the respective data streams or data packets Pxy, Qxy, Rxy, ... into the respective buffers 2P, 2Q, 2R, ... In the example, Pxy, Qxy and Rxy indicates all IP packets (Internet Protocol) belonging to a frame number y of a Group Of Pictures (GOP) number x.

According to Figure 1 the data packets Pxy, Qxy, Rxy of the respective base layer P and enhancement layers Q and R which are buffered in the respective buffers or memories 2P, 2Q and 2R are now scheduled by a scheduler 3 into at least one asynchronous data stream on the basis of a first content sequence index CSI, wherein data packets of the at least one enhancement layer data stream Q, R, ... having a content sequence index CSI being lower than a first content sequence index CSI1 input to the scheduler are discarded or removed from the buffer and not transmitted by the transmitter 4. According to the present invention the content sequence index CSI defines a specific content relationship between the plurality of data packets in the different layers in order to realize a correct recomposition of the received data packets on a content basis in the receiver terminal.

This allows a very effective asynchronous transmission of data packets to the receiver terminal 5 as will be shown in Figure 2. In Figure 2 a simplified temporal view of for the playout of a video application is shown, wherein t0 defines a beginning of the movie sequence, t1 defines the time for the current content (e.g. picture) as playout in the receiver terminal, t2 defines the time up to which the future data packets of the base layer P have been already stored in the buffer 6 of the receiver 5 and t3 defines the time up to which the maximum buffer size may be filled up with data packets of the layer 1 or base layer P. Even if t refers to the playtime of the base layer it may also refer to different content sequence indices CSI. In detail, a frame number of the multimedia signal MS or an event marker (not shown) may be used alternatively, wherein the event marker may be indepedent from a playout time of the base layer P.

In case the receiver 5 and its respective buffer 6 feeds back the content sequence index CSI1 or a time stamp t1 to the scheduler 3 of the transmission apparatus AN the scheduler may discard all data packets of the enhancement layers which may be still buffered in the buffers 2Q and 2R for the expired time t0 to t1, since a transmission of these data packets could not improve any longer the playout quality at the receiver terminal 5. Thus, the efficiency on the transmission path to the user equipment is improved substantially. Particularly, when using mobile terminals with very limited resources in respect of buffer size, transmission capacity, distortion etc. the streaming of multimedia contents is improved effectively. It should be noted, that the content sequence index may be also a non feed back CSI, e.g. constituting a (local) CSI pre-programmed in the scheduler 3 (not shown).

In order to further improve the transmission efficiency the scheduler 3 may schedule the buffered data packets Pxy, Qxy, Rxy, ... on the basis of a second content sequence index CSI2, i.e. the time stamp t2 indicating the last data packet Pxy of the base layer P stored already in the receiver buffer 6. In detail, the scheduler 3 may use the data packets of the base layer P in a privileged manner, if the subtraction of the first and second content sequence index CSI2-CSI1 is below a predefined threshold value. That is, in case the remaining time of the already stored data packets Pxy for the base layer P is below $\Delta t1$ then the scheduler may prioritize the data packets to be transmitted of the base layer P in order to avoid a so-called buffer underrun at the receiver 5.

According to a further not shown embodiment, this predefined threshold value may be variable and particularly dependent from the effective playout time of the base layer P in the receiver 5. In detail, in case a user selects a "fast forward mode" (FF) to play out the multimedia data, i.e. video, the threshold $\Delta t1$ may be increased in order to reliably avoid buffer underrun also for these cases.

Moreover, the scheduler 3 may schedule the buffered data packets Pxy, Qxy, Rxy, ... on the basis of a buffer size in the receiver buffer 6, i.e. CSI3 or $t_3$. In detail, packets from each layer may be further prioritized with specific weights on the basis of the remaining buffer size, which is not occupied by the data packets of the base layer P.

The following description is based on a time stamp t used in each IP data packets as content sequence index CSI. The protocol for packet priority insertion according to the present invention and for a corresponding receiving station is shown in the following:

In phase 1 IP-data packets may be received at the access node AN from a server/gateway (not shown) for a corresponding receiver or user equipment 5, 6. These data packets represent the fragmented sections of a frame in a group of pictures (GOP).

In a phase 2 the base layer P and each of the enhancement layers Q and R are buffered separately within respective buffers 2P, 2Q, 2R. A time stamp may be inserted on a per frame basis. Because source-encoded bit-rates varies depending on the layer, the number of IP-packets which are given the same time stamp is also layer dependent.

In a phase 3 the receiver terminal 5 with its buffer 6 may feed back at least one of the following information: Feedback of current time stamp (e.g. t1) being played out. For example, the frame index and the corresponding GOP index (Group Of Picture index) may be feedback to the scheduler 3. Furthermore, the last time stamp in the buffer i.e. t2 may be submitted to the scheduler 3, which corresponds to the number of base layer bits in the receiver buffer 6 ($n_{buffer}$).

Finally, an estimated playout time of the buffer content may be feedback to the scheduler 3. Of course, further feedback information may be submitted to the scheduler in order to realize a well directed rescheduling of the data packets into the asynchronous data stream AD.

In particular, the scheduler 3 may prioritize the data packets from each layer for each user with specific weights: Packets from each layer for each user may be prioritized with weights

$$w = \frac{w_l}{n_{buffer}(u,i) + r_c(u,i) + r_{time}(u,i-1) + c_1} + c_2 \quad ,$$ where $r_{time}(u,i\text{-}1)$ is the previous average rate served for user in bits/sOFDM time slot until time slot index $i$-1, $r_c(u,i)$ is the number of bits served until resource block c in time slot $i$ and user $u$. $c_1$, $c_2$ are regularisation constants (e.g. $c_1$=$c_2$=1) , $n_{buffer}(u,i)$ is the amount of data received by the user u (at the receiver) for the time slot i and $w_l$ is a pre-determined packet prioritisation. This metric considers all IP packets with equal priority if the rate served per user is high or if the estimated play out time is large. On the other hand, low layers and users with lower past rate served are given priority if the sum in denominator is small. Multi-user resource allocation is then based on $max_u wQ(u,i,c)$ where $Q(u,i,c)$ is the CQI report for user u, time slot i, resource block c. The above scheduling rule is an extension of multi-user proportional fair scheduling e.g, an algorithm with additionally incorporating buffer content feedback.

In principle, the scheduling rule implements multi-user prioritisation over a pre-set packet prioritisation based on inversely proportionality to the past served rate for that user as well as the buffer content at the user's end.

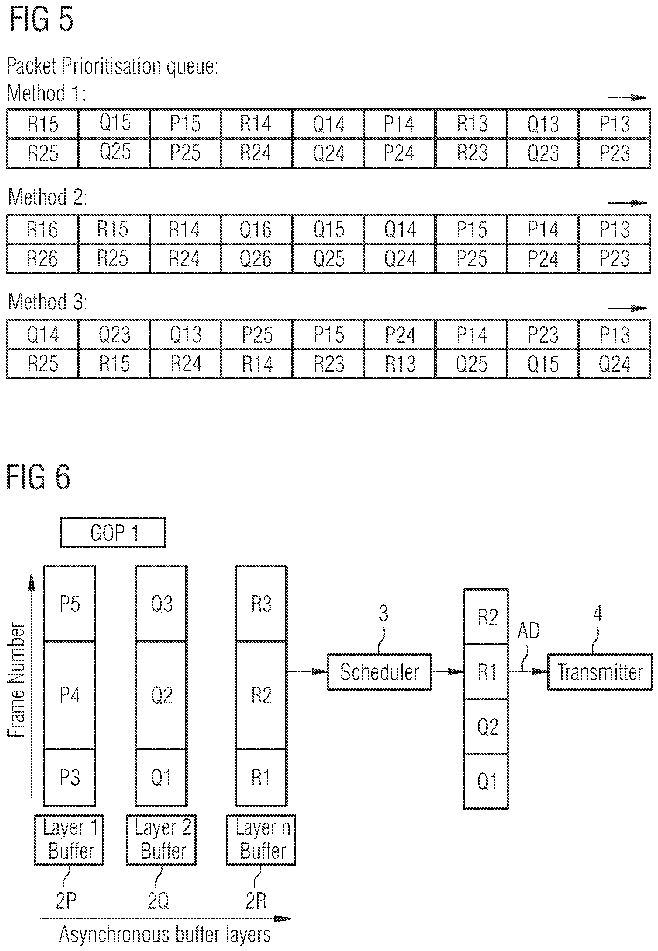

Figure 4 illustrates a packet arrival according to a Group Of Pictures (GOP), temporal frame number and enhancement layers in order to understand basic packet prioritization rules, while Figure 5 illustrates a table showing the different packet prioritization rules which may be used according to the present invention with respect to Figure 4.

In the following the basic packet prioritization rules are described in connection with Figures 4 and 5.

In Figure 4 Pxy indicates all IP data packets belonging to frame number y of Group Of Pictures (GOP) number x. Similarly, Qxy and Rxy indicate that of higher enhancement layers as shown in Figure 3. The example for packet prioritization for the three different main methods is shown in the table according to Figure 5.

Method 1: Temporal Resolution Method

According to this method 1 packets are prioritized in the order of temporal resolution within a Group Of Pictures (GOP). Sub prioritization of base layer P and enhancement layers happens within this temporal prioritization. This particular prioritization rules gives significance to temporal motion of e.g. an MPEG stream. Thus, e.g. fast moving objects may be displayed in great detail.

According to Figure 5 this temporal resolution method results in a packet prioritization queue starting from data packet P13 to R15 and continuing from P23 to R25.

Method 2: Enhancement Layer Method within a Group Of Pictures

According to this alternative method the scheduler 3 first prioritizes the data packets on the basis of video quality layers, whether base layer or enhancement layer shall be used. The base layer P is prioritized first, followed by the picture quality enhancement layers Q. Sub prioritization of temporal enhancement layers R may follow. This method is suitable for viewing high quality frames in an MPEG stream.

According to Figure 5 this method 2 results in data packets starting from P13 to R16 and continuing by P23 to R26.

Method 3: Inter-GOP method (Enhancement Layer Method across a multiple set number of Group Of Pictures)

According to this method the scheduler 3 prioritizes data packets across a multiple set number of Group Of Pictures, e.g. GOP1 and GOP2 as shown in Figure 4. The base layer P of key frames across many GOPs are prioritized first. This is sequentially followed by enhancement layers Q of the next higher temporal resolution frames across many groups of pictures GOP. The sequence continues into the next enhancement layer R, wherein again key frames first and temporal frames are next selected. This rule is intended to enhance basic content viewing and to reduce interruptions.

According to Figure 5 this method 3 starts with data packets P13 to Q14 which are followed by data packets Q24 to R25.

Of course, many other packet prioritization queues may be used and in particular combinations of the above-mentioned basic rules.

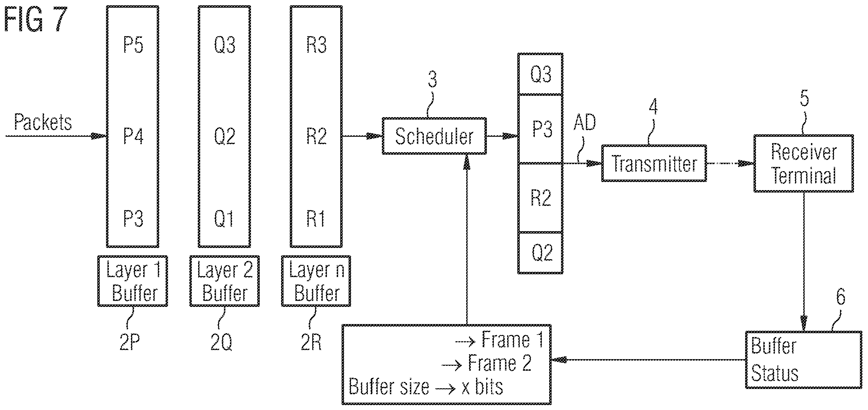

In the following Figures 6 and 7 the asynchronous buffer management is described in detail, wherein Figure 6 refers to an example without feedback, while Figure 7 refers to a system including a feedback of content sequence indices CSI in accordance with the present invention.

In the example according to Figure 6 a Group Of Pictures index has been dropped for convenience. Thus, Py indicates all IP packets belonging to frame number y of Group Of Pictures number 1. In similar way Qy and Ry indicate the respective IP packets belonging to the respective frame number y of GOP number 1.

According to Figure 6 the base layer buffer 2P (layer 1) buffers the data packets P3, P4 and P5. The enhancement layer buffer 2Q (layer 2) may buffer the data packets Q1, Q2 and Q3. Finally, the enhancement layer buffer 2R (layer 3) may buffer the data packets R1, R2 and R3 of the respective enhancement layer R.

Since in Figure 6 the transmission scheduler 3 is blind about whether data packets yet to be transmitted are already past the deadline at the receiver queue, it may provide obviously expired data packets such as Q1 and R1 as asynchronous data stream AD to the transmitter 4.

According to the example of Figure 7 a client feedback mechanism is provided according to the present invention. This feedback may indicate the packet expiry deadlines and a segment id (identification) of the packet being played currently. In detail, referring to Figure 2 the receiver terminal 5 and its buffer 6 may feed back a first content sequence index 1 which indicates the segment currently being played, i.e. frame 1. Thus, the packet expiry deadline indicates the timeline by which the content yet to be transmitted will be required at the receiver 5. Furthermore an estimate may be made using the rate of playout time at the receiver 5 and a buffer size of the receiver buffer 6. The segment id indicates the segment currently being played (t1 in Figure 2). This avoids transmission of the higher layers of the already expired segments or frames.

Thus, according to the example of Figure 7 using exactly the same data packets in the buffers 2P, 2Q and 2R the data packets Q1 and R1 of the enhancement layers Q and R would be discarded and instead the data packets P3 and Q3 are inserted into the asynchronous data stream AD to be transmitted by the transmitter 4. Thus, the transmission efficiency is substantially improved resulting in less buffer underrun and improving quality of the displayed pictures on receiver side.

According to the specific example of Figure 7 the frame id in the feedback indicates 2. This information may be utilized by the transmitter and before, data packets Q1 and R1 belonging to the higher layers are not transmitted. These data packets Q1 and R1 are expired and are removed from the transmit buffer. For example, there is illustrated a transmission with a packet prioritization rule as in method 1. That is, enhancement layer packets Q2 and R2 are transmitted first to support the ongoing base layer P2. This transmission is sequentially followed by the base layer and enhancement layer of next higher temporal layer frame 3. Therefore, data packets P3 and Q3 are scheduled next according to Figure 7.

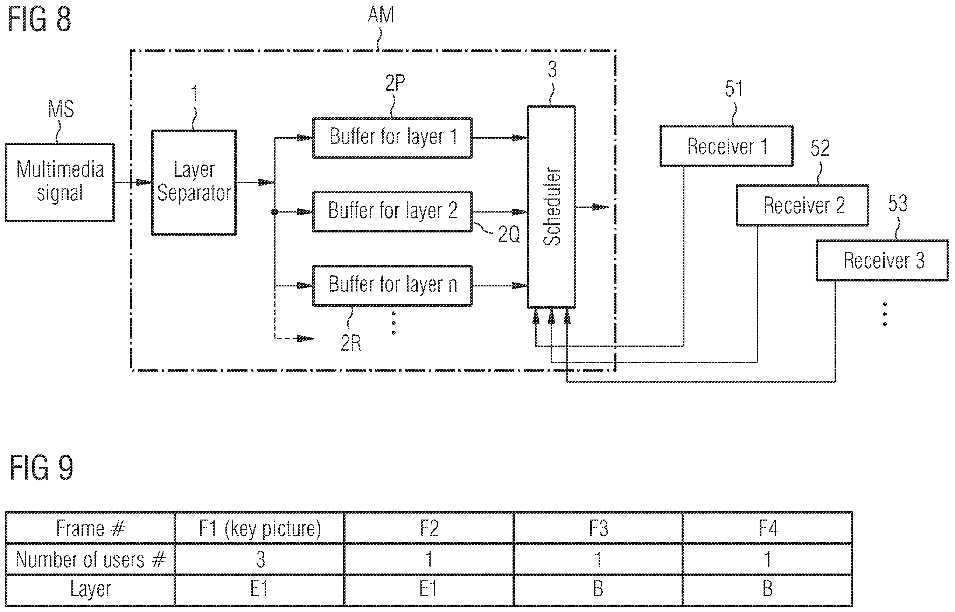

Figure 8 illustrates a simplified block diagram of a system for multicast transmission of layered encoded multimedia signals according to an embodiment of the present invention, wherein same reference signs refer to same or similar elements as shown in Figures 1 to 7 and, therefore, a reiteration of these elements is omitted here.

According to Figure 8 an asynchronous transmission mode is supported for a plurality of receiver devices 51, 52, 53, wherein the transmission apparatus AN supports multicast mode. In detail, Figure 8 demonstrates a working scenario for multicast mode support with asynchronous layer transmission. It is assumed that each receiver device 51, 52, 53 etc. still performs unicast feedback. More than one client (receiver) may request streaming of the same multimedia content, e.g. a football game. A typical scalable video coding solution for multicast applications may provide the so-called graceful degradation, as in HDTV (High Definition TV). According to this solution, both base layer P and enhancement layers Q and R are transmitted to devices. Clients (receiver) decode either only the base layer P or multiple layers based on channel quality. However, with individual unicast client feedback, about both the channel quality and the buffer status of the receiver buffer 6 (not shown) the scheduler 3 could again exploit asynchronous packet transmissions. According to the present invention the users may be grouped according to their feedback in order to exploit redundancy.

The grouping of the users may be made as follows:

For asynchronous transmissions, clients may be grouped based on similar packet prioritization rules (see above).

Temporal scalability first method (QoS Method):

According to this method the receivers indicating the same GOP index in their feedback are grouped together.

The frame index for a frame number for transmission minimum of all frame indices with a particular GOP. The minimum is taken over the set of grouped receivers. In fact the minimum of all indices could even be an ARQ (Automatic Repeat reQuest) transmission of frame. This mechanism enables to avoid a high level of redundancy in GOP transmissions, while maintaining a good QoS (Quality of Service) for clients (receivers) viewing the same GOP. In general a trade-off could be defined as $\arg_b \min \left( \left( \sum_{f=a}^{f=b} x(f) d(f) \right) \right)$, where $x(f)$ is the number of users requesting a frame $f$, and $d(f)$ is the perceived distortion if the frame $f$ is not transmitted. Note that layer decoding influence the perceived distortion.

According to Figure 8 the similar packet prioritization rules may be used as described in Figures 1 to 5. Moreover, according to a further embodiment of the present invention the base layer data packets of the asynchronous data stream may be transmitted in a multicast mode, while the enhancement layer data packets are transmitted in a unicast mode. This allows that in case where the hardware of the clients or receivers 51 to 53 is very different or the transmission quality substantially differs between the plurality of receivers, each receiver may play out the multimedia content in its specific best mode.

Figure 9 illustrates an example of client feedback on temporal scalability, i.e. frame numbers. In this case the scheduler 3 decides to transmit the E1 layer of key frame F1 for 3 receivers in the temporal scalability scheme.

Base layer first method(Picture progress method):

According to this method the scheduler 3 gives preference to the latest frame index corresponding to base layer transmission over all client feedback values. This mechanism has the implicit incentive of progressive filing, i.e. the scheduler 3 prefers to provide the latest temporal scalability frame to the entire set of receivers. This preference arises because a progressive transmission could be made use of by ALL receivers in the multicast group by storage at the receiver buffer. Note that not ALL receivers actually asked for the latest frame index.

With the same example as in Figure 9, the scheduler now decides to transmit base layer B of frame F3.

Any hybrid policy between the QoS method and Picture progress method could be described as below

1. If $F = \max_u f(u)$ is the maximum of the frame indices requested over the set of users u requesting the GOP, then define the trade-off as $\arg_b \min \left( \left( \left( \sum_{f=a}^{f=b} x(f) d(f) \right) (F - b + 1) \right) \right)$, where $b$ is the maximum of frame indices scheduled for transmissions as the output of scheduler.

The term F-b therefore indicates the progress of frame transmissions. In the example above, value of F is 4 and b is frame 3. F-b , is then 1.

2. In yet another trade-off metric, the scheduler could consider $\arg_b \min \left( \left( \sum_{f=a}^{f=b} N(f) d(f) \right) \right)$, where

$N(f) = \sum_f x(f)$, i.e. the scheduler considers base layer of frame f to be useful for all users requesting enhancement layer of frames less than f. Effective number of users utilising the base layer transmission of frame F3 is then N(3)=3+1+1=4.

According to this embodiment it may be desirable that the receivers are clustered (e.g. WLAN) (Wireless Local Area Network) so that the receivers undergo more or less similar channel conditions. This provides more efficiency in ARQ (Automatic Repeat reQuest) transmissions as well as the asynchronous transmissions. Moreover, a method for even higher QoS guarantee may be to group the receivers with similar frame index in the buffer status, which ensures that a set of receivers are provisioned.

Reference list

| | |
|---|---|
| 1 | layer separator |
| 2P, 2Q, 2R | layer buffer |
| 3 | scheduler |

| | |
|---|---|
| 4 | transmitter |
| 5, 51, 52, 53 | receiver |
| 6 | receiver buffer |
| MS | layered encoded multimedia signal |
| AD | asynchronous data stream |
| CSI | content sequence index |
| P | base layer |
| Q, R | enhancement layers |
| Pxy, Qxy, Rxy | data packets of respective layers |
| AN | transmission apparatus |

**Claims**

1.  An apparatus for transmission of layered encoded multi-media signals comprising:

    separator means (1) for separating said layered encoded multimedia signal (MS) in a base layer data stream (P) and at least one enhancement layer data stream (Q, R), each data stream including a plurality of data packets (Pxy, Qxy, Rxy) having a content sequence index;
    memory means (2P, 2Q, 2R) for buffering said data packets of said base layer stream (P) and said at least one enhancement layer data stream (Q, R);
    scheduler means (3) for scheduling said buffered data packets (Pxy, Qxy, Rxy) into at least one asynchronous data stream (AD) on the basis of a first content sequence index (CSI1),
    wherein data packets of said at least one enhancement layer data stream (Q, R) having a content sequence index lower than said first content sequence index (CSI1) are discarded, **characterized in that** the apparatus supports multicast mode for a plurality of receivers (51, 52, 53),
    wherein said at least one asynchronous data stream (AD) is a multicast data stream,
    wherein said scheduler means (3) receives a unicast feedback from each of said plurality of receivers (51, 52, 53), the unicast feedback from each of said plurality of receivers (51, 52, 53) comprising a content sequence index representing the current multimedia content played on the receiver (51, 52, 53) and a corresponding Group Of Picture index, wherein the receivers of said plurality of receivers (51, 52, 53) are grouped together due to indicating the same Group Of Picture index in their unicast feedback, and
    wherein the first content sequence index (CSI1) is taken as the minimum content sequence index over the set of receivers of said plurality of receivers (51, 52, 53) grouped together.

2.  An apparatus according to claim 1, wherein said scheduler means (3) schedules said buffered data packets (Pxy, Qxy, Rxy) on the basis of a receiver buffer size, wherein packets from each layer are prioritized with weights on the basis of the remaining buffer size.

3.  An apparatus according to any of claims 1 to 2, wherein said scheduler means (3) schedules said buffered data packets (Pxy, Qxy, Rxy) on a temporal resolution method within a Group Of Pictures (GOP).

4.  An apparatus according to any of claims 1 to 2, wherein said scheduler means (3) schedules said buffered data packets (Pxy, Qxy, Rxy) on an enhancement layer method within a Group Of Pictures (GOP).

5.  An apparatus according to any of claims 1 to 4, wherein said content sequence index is a frame number (y).

6.  An apparatus according to any of claims 1 to 5, wherein it is implemented in an access node of a wireless network using OFDM technology.

7.  A method for transmission of layered encoded multimedia signals comprising the steps:

    separating said layered encoded multimedia signal (MS) in a base layer data stream (P) and at least one enhancement layer data stream (Q, R), each data stream including a plurality of data packets (Pxy, Qxy, Rxy) having a content sequence index;
    buffering said data packets of said base layer stream (P) and said at least one enhancement layer data stream (Q, R); scheduling by a scheduler means (3) said buffered data packets (Pxy, Qxy, Rxy) into an asynchronous data stream (AD) on the basis of a first content sequence index (CSI1), wherein data packets of said at least one enhancement layer data stream (Q, R) having a content sequence index lower than said first content sequence index (CSI1) are discarded; **characterized in that** multicast mode is supported for a plurality of receivers (51, 52, 53),
wherein said asynchronous data stream (AD) is transmitted in the multicast mode,
wherein each of said plurality of receivers (51, 52, 53) performs a unicast feedback to said scheduler means (3), the unicast feedback from each of said plurality of receivers (51, 52, 53) comprising a content sequence index representing the current multimedia content played on the receiver (51, 52, 53) and a corresponding Group Of Picture index, wherein the receivers of said plurality of receivers (51, 52, 53) are grouped together due to indicating the same Group Of Picture index in their unicast feedback, and
wherein the first content sequence index (CSI) is taken as the minimum content sequence index over the set of receivers of said plurality of receivers (51, 52, 53) grouped together.

8. A method according to claim 7, wherein said rescheduling of said buffered data packets (Pxy, Qxy, Rxy) is based on the buffer size of said receiver (51, 52, 53), wherein packets from each layer are prioritized with weights on the basis of the remaining buffer size.

9. A method according to any of claims 7 to 8, wherein said rescheduling of said buffered data packets (Pxy, Qxy, Rxy) is based on a temporal resolution method within a Group Of Pictures (GOP).

10. A method according to any of claims 7 to 8, wherein said rescheduling of said buffer data packets (Pxy, Qxy, Rxy) is based on an enhancement layer method within a Group Of Pictures (GOP).

11. A method according to any of claims 7 to 10, wherein said content sequence index is a frame number (y).

12. A method according to any of claims 7 to 11, wherein said separating is realized by receiving a plurality of layers of said layered encoded multimedia signal (MS) over a plurality of ports.

13. A method according to any of claims 7 to 12, wherein the transmission is based on OFDM technology.

14. A system for transmission of layered encoded multimedia signals comprising:

an apparatus (AN) according to any of claims 1 to 6;
a transmitter (4) for transmitting said asynchronous data stream (AD); and
the plurality of receivers (51, 52, 53) for receiving said asynchronous data stream (AD), for detecting the first content sequence index (CSI1) representing the current multimedia content played on the receiver (51, 52, 53), and for realizing said unicast feedback to said scheduler means (3).

15. A system according to claim 14, wherein the content sequence index (CSI) defines a specific content relationship between the plurality of data packets in the different layers in order to realize a correct recomposition of the received data packets on a content basis in each receiver (51, 52, 53) of said plurality of receivers (51, 52, 53).

16. A system according to claim 14 or 15, wherein each receiver (51, 52, 53) of said plurality of receivers (51, 52, 53) further detects the size of its buffer (6) and realizes a feedback of said buffer size to said scheduler means (3).

17. A system according to any of claims 14 to 16, wherein said apparatus (AN) is implemented in an access node of a wireless network;
said transmitter (4) is based on OFDM technology; and each receiver (51, 52, 53) of said plurality of receivers (51, 52, 53) is a mobile multimedia terminal.

**Patentansprüche**

1. Vorrichtung zur Übertragung von geschichteten codierten Multimediasignalen mit:

Aufteilungsmitteln (1) zum Aufteilen des geschichteten codierten Multimediasignals (MS) in einen Basisschicht-Datenstrom (P) und mindestens einen Verstärkungsschicht-Datenstrom (Q, R), wobei jeder Datenstrom mehrere Datenpakete (Pxy, Qxy, Rxy) aufweist, die einen Inhaltsabfolgeindex aufweisen;
Speichermitteln (2P, 2Q, 2R) zum Zwischenspeichern der Datenpakete des Basisschicht-Datenstroms (P) und des mindestens einen Verstärkungsschicht-Datenstroms (Q, R);

Zeitplanungsmitteln (3) zur zeitlichen Einordnung der zwischengespeicherten Datenpakete (Pxy, Qxy, Rxy) in mindestens einen asynchronen Datenstrom (AD) auf der Basis eines ersten Inhaltsabfolgeindexes (CSI1), wobei die Datenpakete des mindestens einen Verstärkungsschicht-Datenstroms (Q, R) gelöscht werden, die einen Inhaltsabfolgeindex aufweisen, der niedriger als der erste Inhaltsabfolgeindex (CSI1) ist,

**dadurch gekennzeichnet, dass**

die Vorrichtung für mehrere Empfänger (51, 52, 53) einen Multicast-Modus unterstützt,

wobei der mindestens eine asynchrone Datenstrom (AD) ein Multicast-Datenstrom ist,

wobei die Zeitplanungsmittel (3) eine Unicast-Rückmeldung von jedem der mehreren Empfänger (51, 52, 53) empfangen,

wobei die Unicast-Rückmeldung von jedem der mehreren Empfänger (51, 52, 53) einen Inhaltsabfolgeindex, der den aktuellen Multimediainhalt darstellt, der auf dem Empfänger (51, 52, 53) abgespielt wird, und einen entsprechenden Bildgruppenindex aufweist,

wobei die Empfänger von den mehreren Empfängern (51, 52, 53) aufgrund der Anzeige des gleichen Bildgruppenindexes in ihrer Unicast-Rückmeldung in Gruppen zusammengefasst sind und

wobei der erste Inhaltsabfolgeindex (CSI1) als der minimale Inhaltsabfolgeindex über die Menge von Empfängern von den mehreren Empfängern (51, 52, 53), die in einer Gruppe zusammengefasst sind, genommen wird.

2. Vorrichtung nach Anspruch 1, wobei die Zeitplanungsmittel (3) die zeitliche Einordnung der zwischengespeicherten Datenpakete (Pxy, Qxy, Rxy) auf der Basis einer Empfängerzwischenspeichergröße vornehmen, wobei Paketen aus einer jeden Schicht mit Wichtungen auf der Basis der verbleibenden Zwischenspeichergröße eine Priorität zugeteilt wird.

3. Vorrichtung nach einem der Ansprüche 1 bis 2, wobei die Zeitplanungsmittel (3) die zeitliche Einordnung der zwischengespeicherten Datenpakete (Pxy, Qxy, Rxy) in einem zeitlichen Auflösungsverfahren innerhalb einer Bildgruppe (GOP) vornehmen.

4. Vorrichtung nach einem der Ansprüche 1 bis 2, wobei die Zeitplanungsmittel (3) die zeitliche Einordnung der zwischengespeicherten Datenpakete (Pxy, Qxy, Rxy) in einem Verstärkungsschichtverfahren innerhalb einer Bildgruppe (GOP) vornehmen.

5. Vorrichtung nach einem der Ansprüche 1 bis 4, wobei der Inhaltsabfolgeindex eine Rahmennummer (y) ist.

6. Vorrichtung nach einem der Ansprüche 1 bis 5, wobei sie in einem Zugriffsknoten eines drahtlosen Netzwerkes unter Verwendung der OFDM-Technologie implementiert ist.

7. Verfahren zur Übertragung von geschichteten codierten Multimediasignalen, die Schritte umfassend zum:

Aufteilen des geschichteten codierten Multimediasignals (MS) in einen Basisschicht-Datenstrom (P) und mindestens einen Verstärkungsschicht-Datenstrom (Q, R), wobei jeder Datenstrom mehrere Datenpakete (Pxy, Qxy, Rxy) aufweist, die einen Inhaltsabfolgeindex aufweisen;

Zwischenspeichern der Datenpakete des Basisschicht-Datenstroms (P) und des mindestens einen Verstärkungsschicht-Datenstroms (Q, R) ;

zeitliches Einordnen der zwischengespeicherten Datenpakete (Pxy, Qxy, Rxy) durch Zeitplanungsmittel (3) in einen asynchronen Datenstrom (AD) auf der Basis eines ersten Inhaltsabfolgeindexes (CSI1), wobei die Datenpakete des mindestens einen Verstärkungsschicht-Datenstroms (Q, R) gelöscht werden, die einen Inhaltsabfolgeindex aufweisen, der niedriger als der erste Inhaltsabfolgeindex (CSI1) ist,

**dadurch gekennzeichnet, dass**

für mehrere Empfänger (51, 52, 53) ein Multicast-Modus unterstützt wird,

wobei der asynchrone Datenstrom (AD) im Multicast-Modus übertragen wird,

wobei jeder der mehreren Empfänger (51, 52, 53) eine Unicast-Rückmeldung an die Zeitplanungsmittel (3) ausführt,

wobei die Unicast-Rückmeldung von jedem der mehreren Empfänger (51, 52, 53) einen Inhaltsabfolgeindex, der den aktuellen Multimediainhalt darstellt, der auf dem Empfänger (51, 52, 53) abgespielt wird, und einen entsprechenden Bildgruppenindex aufweist,

wobei die Empfänger von den mehreren Empfängern (51, 52, 53) aufgrund der Anzeige des gleichen Bildgruppenindexes in ihrer Unicast-Rückmeldung in Gruppen zusammengefasst werden und

wobei der erste Inhaltsabfolgeindex (CSI1) als der minimale Inhaltsabfolgeindex über die Menge von Empfängern von den mehreren Empfängern (51, 52, 53), die in einer Gruppe zusammengefasst sind, genommen wird.

8. Verfahren nach Anspruch 7, wobei das zeitliche Umordnen der zwischengespeicherten Datenpakete (Pxy, Qxy, Rxy) auf der Basis der Zwischenspeichergröße des Empfängers (51, 52, 53) vorgenommen wird, wobei Paketen aus einer jeden Schicht mit Wichtungen auf der Basis der verbleibenden Zwischenspeichergröße eine Priorität zugeteilt wird.

9. Verfahren nach einem der Ansprüche 7 bis 8, wobei das zeitliche Umordnen der zwischengespeicherten Datenpakete (Pxy, Qxy, Rxy) auf Basis eines zeitlichen Auflösungsverfahrens innerhalb einer Bildgruppe (GOP) vorgenommen wird.

10. Verfahren nach einem der Ansprüche 7 bis 8, wobei das zeitliche Umordnen der zwischengespeicherten Datenpakete (Pxy, Qxy, Rxy) in einem Verstärkungsschichtverfahren innerhalb einer Bildgruppe (GOP) vorgenommen wird.

11. Verfahren nach einem der Ansprüche 7 bis 10, wobei der Inhaltsabfolgeindex eine Rahmennummer (y) ist.

12. Verfahren nach einem der Ansprüche 7 bis 11, wobei das Aufteilen durch Empfangen von mehreren Schichten des geschichteten codierten Multimediasignals (MS) über mehrere Anschlüsse realisiert wird.

13. Verfahren nach einem der Ansprüche 7 bis 12, wobei die Übertragung auf OFDM-Technologie basiert.

14. System zur Übertragung von geschichteten codierten Multimediasignalen mit:

   einer Vorrichtung (AN) nach einem der Ansprüche 1 bis 6;
   einem Sender (4) zum Übertragen des asynchronen Datenstroms (AD); und
   den mehreren Empfängern (51, 52, 53) zum Empfangen des asynchronen Datenstroms (AD), zum Ermitteln des ersten Inhaltsabfolgeindexes (CSI1), der den aktuellen Multimediainhalt darstellt, der auf dem Empfänger (51, 52, 53) abgespielt wird, und zum Realisieren der Unicast-Rückmeldung an die Zeitplanungsmittel (3).

15. System nach Anspruch 14, wobei der Inhaltsabfolgeindex (CSI) eine spezielle Inhaltsbeziehung zwischen den mehreren Datenpaketen in den unterschiedlichen Schichten festlegt, um eine korrekte Neuzusammenstellung der empfangenen Datenpakete auf einer Basis von Inhalten in jedem Empfänger (51, 52, 53) von den mehreren Empfängern (51, 52, 53) zu realisieren.

16. System nach Anspruch 14 oder 15, wobei jeder Empfänger (51, 52, 53) von den mehreren Empfängern (51, 52, 53) ferner die Größe seines Zwischenspeichers (6) ermittelt und eine Rückmeldung der Zwischenspeichergröße an die Zeitplanungsmittel (3) realisiert.

17. System nach einem der Ansprüche 14 bis 16, wobei die Vorrichtung (AN) in einem Zugangsknoten eines drahtlosen Netzwerks implementiert ist;
   der Sender (4) auf OFDM-Technologie basiert; und
   jeder Empfänger (51, 52, 53) von den mehreren Empfängern (51, 52, 53) ein mobiles Multimedia-Endgerät ist.

**Revendications**

1. Appareil pour la transmission de signaux multimédia codés en couches comprenant :

   un moyen de séparation (1) pour séparer ledit signal multimédia codé en couches (MS) en un flux de données de couche de base (P) et au moins un flux de données de couche d'amélioration (Q, R), chaque flux de données comprenant une pluralité de paquets de données (Pxy, Qxy, Rxy) possédant un indice de séquence de contenus, un dispositif de mémoire (2P, 2Q, 2R) pour mettre en mémoire tampon lesdits paquets de données dudit flux de couche de base (P) et dudit au moins un flux de données de couche d'amélioration (Q, R), un moyen de planification (3) pour programmer lesdits paquets de données mis en mémoire tampon (Pxy, Qxy, Rxy) dans au moins un flux de données asynchrone (AD) sur la base d'un premier indice de séquence de contenus (CSI1), dans lequel des paquets de données du dit au moins un flux de données de couche d'amélioration (Q, R) ayant un indice de séquence de contenus inférieur au dit premier indice de séquence de contenus (CSI1) sont écartés,

**caractérisé en ce que**

l'appareil prend en charge un mode de multidiffusion pour une pluralité de récepteurs (51, 52, 53),

dans lequel ledit au moins un flux de données asynchrone (AD) est un flux de données multidiffusion,

ledit moyen de planification (3) reçoit une information en retour de monodiffusion de chacun de ladite pluralité des récepteurs (51, 52, 53), l'information de retour de chacun de ladite pluralité des récepteurs (51, 52, 53) comprenant un indice de séquence de contenus représentant le contenu multimédia instantané diffusé sur le récepteur (51, 52, 53) et un indice de Groupe d'images correspondant,

les récepteurs de ladite pluralité des récepteurs (51, 52, 53) sont groupés ensemble en fonction d'une indication de même indice de Groupe d'images dans leur information de retour de monodiffusion, et

le premier indice de séquence de contenus (CSI1) est considéré comme l'indice minimum de séquence de contenus dans l'ensemble de récepteurs de ladite pluralité des récepteurs (51, 52, 53) groupés ensemble.

2. Appareil selon la revendication 1, dans lequel ledit moyen de planification (3) programme lesdits paquets de données mis en mémoire tampon (Pxy, Qxy, Rxy) sur la base d'une taille de mémoire tampon de récepteur, et dans lequel des paquets de chaque couche sont hiérarchisés à l'aide de poids sur la base de la taille de mémoire tampon restante.

3. Appareil selon la revendication 1 ou 2, dans lequel ledit moyen de planification (3) programme lesdits paquets de données mis en mémoire tampon (Pxy, Qxy, Rxy) par un procédé de résolution temporelle dans le Groupe d'images (GOP).

4. Appareil selon la revendication 1 ou 2, dans lequel ledit moyen de planification (3) programme lesdits paquets de données mis en mémoire tampon (Pxy, Qxy, Rxy) en appliquant un procédé de couche d'amélioration dans le Groupe d'images (GOP).

5. Appareil selon l'une quelconque des revendications 1 à 4, dans lequel ledit indice de séquence de contenus est un numéro de trame (y).

6. Appareil selon l'une quelconque des revendications 1 à 5, qui est mis en oeuvre dans un noeud d'accès d'un réseau sans fil utilisant la technologie OFDM.

7. Procédé de transmission de signaux multimédia codés en couches, comprenant les étapes consistant à :

séparer ledit signal multimédia (MS) codé en couches en un flux de données de couche de base (P) et au moins un flux de données de couche d'amélioration (Q, R), chaque flux de données incluant une pluralité de paquets de données (Pxy, Qxy, Rxy) ayant un indice de séquence de contenus,

mettre en mémoire tampon lesdits paquets de données du dit flux de couche de base (P) et du dit au moins un flux de données de couche d'amélioration (Q, R),

programmer par un moyen de planification (3) les dits paquets de données mis en mémoire tampon (Pxy, Qxy, Rxy) dans un flux de données asynchrone (AD) sur la base d'un premier indice de séquence de contenus (CSI1), dans lequel des paquets de données du dit au moins un flux de données de couche d'amélioration (Q, R) ayant un indice de séquence de contenus inférieur au dit premier indice de séquence de contenus (CSI1) sont écartés,

**caractérisé en ce que**

le mode de multidiffusion est pris en charge pour une pluralité de récepteurs (51, 52, 53), et

dans lequel ledit au moins un flux de données asynchrone (AD) est transmis dans le mode multidiffusion,

dans lequel chacun de ladite pluralité des récepteurs (51, 52, 53) envoie une information en retour de monodiffusion au dit moyen de planification (3), ladite information de retour de chacun de ladite pluralité des récepteurs (51, 52, 53) comprenant un indice de séquence de contenus représentant le contenu multimédia instantané diffusé sur le récepteur (51, 52, 53) et un indice de Groupe d'images correspondant,

les récepteurs de ladite pluralité des récepteurs (51, 52, 53) sont groupés ensemble suite à une indication de même indice de Groupe d'images reçue dans leur information de retour de monodiffusion, et

le premier indice de séquence de contenus (CSI1) est considéré comme l'indice minimum de séquence de contenus dans l'ensemble de récepteurs de ladite pluralité des récepteurs (51, 52, 53) groupés.

8. Procédé selon la revendication 7, dans lequel ladite programmation des dits paquets de données mis en mémoire tampon (Pxy, Qxy, Rxy) est basée sur la taille de mémoire tampon du dit récepteur (51, 52, 53), et dans lequel des paquets de chaque couche sont hiérarchisés à l'aide de poids sur la base de la taille de mémoire tampon restante.

**9.** Procédé selon l'une des revendications 7 ou 8, dans lequel ladite programmation des dits paquets de données mis en mémoire tampon (Pxy, Qxy, Rxy) est basée sur un procédé de résolution temporelle dans un Groupe d'images (GOP).

**10.** Procédé selon l'une des revendications 7 ou 8, dans lequel ladite programmation des dits paquets de données mis en mémoire tampon (Pxy, Qxy, Rxy) est basée sur un procédé de couche d'amélioration dans un Groupe d'images (GOP).

**11.** Procédé selon l'une quelconque des revendications 7 à 10, dans lequel ledit indice de séquence de contenus est un numéro de trame (y).

**12.** Procédé selon l'une quelconque des revendications 7 à 11, dans lequel ladite séparation est réalisée en recevant une pluralité de couches du dit signal multimédia (MS) codé en couches sur une pluralité de points d'accès.

**13.** Procédé selon l'une quelconque des revendications 7 à 12, dans lequel la transmission est basée sur une technologie OFDM.

**14.** Système de transmission de signaux multimédia codés en couches comprenant :

un appareil (AN) selon l'une quelconque des revendications 1 à 6,
un émetteur (4) pour transmettre le dit flux de données asynchrone (AD), et
la pluralité de récepteurs (51, 52, 53) aptes à recevoir ledit flux de données asynchrone (AD), détecter le premier indice de séquence de contenus (CSI1) représentant le contenu multimédia instantané diffusé sur le récepteur (51, 52, 53) et envoyer une information en retour de monodiffusion au dit moyen de planification (3).

**15.** Système selon la revendication 14, dans lequel l'indice de séquence de contenus (CSI) définit une relation de contenu spécifique entre la pluralité des paquets de données dans les différentes couches afin de réaliser une recomposition correcte des paquets de données reçus sur une base de contenu dans chaque récepteur (51, 52, 53) de ladite pluralité des récepteurs (51, 52, 53).

**16.** Système selon la revendication 14 ou 15, dans lequel chaque récepteur (51, 52, 53) de ladite pluralité des récepteurs (51, 52, 53) détecte en outre la taille de sa mémoire tampon (6) et envoie une information en retour de ladite taille de mémoire tampon au dit moyen de planification (3).

**17.** Système selon l'une quelconque des revendications 14 à 16, dans lequel ledit appareil (AN) est mis en oeuvre dans un noeud d'accès d'un réseau sans fil,
ledit émetteur (4) est basé sur une technologie OFDM, et chaque récepteur (51, 52, 53) de ladite pluralité de récepteurs (51, 52, 53) est un terminal mobile multimédia.

FIG 1

FIG 2

FIG 3

P: base layer
Q, R: enhancement layers

quality resolution

temporal resolution

FIG 4

# FIG 5

Packet Prioritisation queue:

Method 1:

| R15 | Q15 | P15 | R14 | Q14 | P14 | R13 | Q13 | P13 |
|-----|-----|-----|-----|-----|-----|-----|-----|-----|
| R25 | Q25 | P25 | R24 | Q24 | P24 | R23 | Q23 | P23 |

Method 2:

| R16 | R15 | R14 | Q16 | Q15 | Q14 | P15 | P14 | P13 |
|-----|-----|-----|-----|-----|-----|-----|-----|-----|
| R26 | R25 | R24 | Q26 | Q25 | Q24 | P25 | P24 | P23 |

Method 3:

| Q14 | Q23 | Q13 | P25 | P15 | P24 | P14 | P23 | P13 |
|-----|-----|-----|-----|-----|-----|-----|-----|-----|
| R25 | R15 | R24 | R14 | R23 | R13 | Q25 | Q15 | Q24 |

# FIG 6

FIG 7

# FIG 8

# FIG 9

| Frame # | F1 (key picture) | F2 | F3 | F4 |
|---|---|---|---|---|
| Number of users # | 3 | 1 | 1 | 1 |
| Layer | E1 | E1 | B | B |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004194142 A1, JIANG ZHIMEI
- US 2003195977 A1, LIU TIANMING
- WO 2004107755 A, KANG SANG HYUK
- EP 1742476 A1

**Non-patent literature cited in the description**

- Scalable Video Coding of H.264/AVC Video Streaming with QoS-Based Active Dropping in 802.16e Networks. **JEN-CHUN CHIANG et al.** ADVANCED INFORMATION NETWORKING AND APPLICATIONS-WORKSHOPS, 2008, AINAW 2008, 22ND INTERNATIONAL CONFERENCE ON. IEEE, 25 March 2008, 1450-1455
- Downlink OFDM Scheduling and Resource Allocation for Delay Constraint SVC Streaming. **XIN JI et al.** COMMUNICATIONS, 2008, ICC'08, IEEE INTERNATIONAL CONFERENCE ON. IEEE, 19 May 2008, 2512-2518